# EUROPEAN PATENT APPLICATION

(11) **EP 2 708 160 A2**
(43) Date of publication of application: **19.03.2014**
(21) Application number: 13275220.5
(22) Date of filing: 16.09.2013
(51) Int. Cl.: A47C 31/10

(54) **Puncture resistant mattress cover**

(30) Priority: 17.09.2012 GB 201216535
(71) Applicant: Allaway, Michael, London WC1N 3XX (GB); Allaway, Elizabeth, London WC1N 3XX (GB)
(72) Inventor: Allaway, Michael, London, Greater London WC1N 3XX (GB)
(74) Representative: Copsey, Timothy Graham

(57) **Abstract**

The invention relates to a waterproof mattress cover with improved resistance to puncture or piercing by sharp objects. The covers or protectors are designed to protect mattresses or similar soft furnishings from liquid contamination.

## Description

This invention relates to waterproof mattress covers with improved resistance to puncture or piercing by sharp objects. The covers, or protectors, are designed to protect mattresses from liquid contamination. Improved resistance to puncture reduces the chances of contamination of the underlying mattress, which is particularly important in hospital or care home environments, for example.

Mattresses and cushions in hospitals and care homes are mainly protected by durable washable mattress covers or protectors. The protective cover does not come into direct contact with a person's body, as conventional washable fabric sheets are placed on top of the cover. The covers are used to protect the mattress from contamination and are therefore designed to be waterproof, but at the same time they must be breathable.

If the durable, waterproof mattress protector outer cover is pierced by a needle or sharp object, small perforations and lacerations can allow the ingress of fluid, leading to contamination of the underlying mattress. Contaminated mattresses cannot be easily cleaned and there is the potential for cross-infection if contaminated mattresses remain in use. Therefore, mattresses which become contaminated are usually destroyed, which is both costly and wasteful. Furthermore, there is a danger that small perforations may go undetected, which could lead to possible health risks to patients, if the mattress is used in a hospital, for example. Hospital mattresses in Europe are traditionally covered using covers made from knitted, stretchable textiles, coated in polyurethane.

Any mattress cover must have the ability to stretch in many directions. If the material is not able to stretch with the movement of the patient, the cover could rupture, compromising the level of protection provided and add to the risk of pressure ulcers developing in patients. Another desired feature of the fabrics used for mattress and pillow protectors is a requirement that they should not rustle or make excessive noise during use.

The average number of days that a patient remains in hospital in the UK is now estimated at about 3 days. Therefore each hospital mattress can be used by an average of 120 patients a year and up to 24 hours a day. In hospices or care homes, the number of patients per mattress may be less, but the mattresses themselves will remain in almost constant use. After only a few months in service most mattresses may show signs of contamination beneath the mattress cover.

In 2009 the Care & Quality Commission (CQC) issued guidelines for NHS hospitals as to how to examine mattresses for contamination. Nursing staff are required to unzip the mattress covers and examine the mattress for stains, before wiping the cover with antiseptic solutions. Unzipping covers is time consuming and this makes it more difficult for nursing staff to adhere to the guidelines and discovery of contamination leaves the nurse and patient waiting for a replacement. The NHS standard requires covers to be a) waterproof, b) vapour permeable and c) able to stretch in all directions. The NHS standards are adhered to by all suppliers of mattress covers in the UK market. However, the standards do not offer sufficient protection against contamination according to the requirements of the CQC as the polyurethane coating that used as a waterproof barrier-layer is easy to pierce.

In 2009 a Medical Device Alert (MDA) was raised; as it was suspected that contamination had occurred in a number of English hospitals due to quality issues. It was retracted following quality inspections proving no fault. Investigations revealed that inspection regimes needed to be improved, as mattress covers are prone to external damage which can result in internal contamination. Mattress covers can become damaged at any time during use or storage. Some examples of the causes of damage to the covers included: needles; damage from other sharp objects; abrasion during handling, transport or movement; as well as inappropriate cleaning and decontamination procedures.

The guidelines for avoiding mattress contamination introduced more stringent procedures for inspecting mattress covers. These include; inspecting the exterior surface of each mattress cover for signs of damage, such as holes or cuts, unzipping and removing the cover in order to inspect its inside surface and the mattress core for staining or contamination, and safely disposing of any covers showing signs of damage or staining. Any contaminated mattress cores must be safely disposed of.

The aim of the present invention is to reduce the risk of the underlying mattress becoming contaminated, and to provide a mattress protector with improved resistance to punctures and daily abrasion.

According to the present invention, there is provided a composite fabric comprising a waterproof layer and a vapour permeable layer, where a central portion of the composite fabric is reinforced with a third layer of puncture-resistant material. There is also provided a mattress cover formed from a composite fabric comprising at least a waterproof layer and a vapour permeable layer, with a central portion comprising a third layer of puncture-resistant material.

The mattress cover may consist of flexible polyurethane coated textiles, with an additional pierce-resistant backing material applied to the reverse side. The conventional polyurethane multi-stretch top layer can be combined with a second vapour-permeable fabric layer by applying a blend of hot melt adhesives. An additional puncture resistant backing material can be attached using a combination of high-frequency welding and hot melt adhesives.

Polyurethane is waterproof, vapour permeable, and can stretch in all directions, making it suitable for the top layer of the mattress cover. Polyurethane has the added advantage that it does not rustle or make excessive noise during use. The polyurethane is usually supplied as a film coating, which can be laminated to knitted polyester fabrics, for example. The two preferred methods of lamination are solvent lamination and hot melt lamination. Solvent lamination uses solvents to fuse the fabric and the polyurethane film into a single monolithic fabric. Hot melt lamination involves the use of a heat activated glue to bond the film to the fabric.

High-frequency welding is also known as dielectric sealing or radio frequency heat sealing. This type of welding is often used to bond polymer films where a strong consistent leak-proof seal is required. High-frequency welding is conducted by placing two pieces of material on a press capable of pressurising both surface areas, for example, a table press. Dies can be used to direct the welding process. High frequency waves, usually around 27 MHz, are passed through the materials. The high-frequency field causes the materials to melt, and the combination of heat and pressure causes the weld to take the shape of the die. There are two main advantages of using high-frequency welding; it is fast and it produces a consistent result. Combining high-frequency welding with hot melt adhesives can produce a perfect seal.

The backing material does not necessarily have to have the same material properties as the upper layers of the mattress cover material. In comparison with the pierce-resistant backing material, the upper layers may have a greater ability to stretch in all directions. The backing material can be applied as a central panel in the mattress cover, for reinforcement of the mattress cover in the areas of greatest wear, whilst the upper layers of the fabric can then be stretched to protect the sides of the mattress.

Examples of suitable fabrics for the upper layers include polyurethane coated knitted polyester. The uppermost layer can be made from any waterproof, vapour permeable material that has the ability to stretch in multiple directions. Any vapour-permeable stretchable fabric can be used for the second, vapour-permeable layer. An example of a suitable fabric for the backing layer is a polyester coated textile. This material may be tightly woven to improve the puncture resistant qualities. The resulting composite fabric retains the vapour permeability of the upper layers.

The level of vapour permeability of a fabric is measured using the water vapour transmission rate (also called the moisture vapour transmission rate). This is the rate at which water vapour can pass through the fabric, in grams of water vapour per square meter of fabric per 24 hour period (g/m²·24hr). A mattress cover would typically aim to have a water vapour transmission rate of at least approximately 100g/m²·24hr, more preferably at least 300g/m²·24hr. Polyvinyl chloride is not considered suitable for use in mattress protectors as it does not meet the requirements of vapour permeability.

Definitions of "waterproof" vary depending on the application. One definition requires the fabric to withstand a pressure of over 9.8kPa without leaking. Mattress covers must conform to the established industry standard NFG07-057 with a minimum result of 19.6kPa (200cm hydrostatic head (water column)).

Examples of the present invention will now be described, by way of example only, with reference to the accompanying diagrammatic drawings, in which:
Figure 1 shows a perspective view of a portion of the composite fabric according to the present invention, partially broken away;
Figure 2 shows schematically a vertical cross-sectional view of the composite fabric according to the present invention during use on a mattress;
Figure 3 shows a planar, magnified view of a perforation to the top layer of the composite fabric; and
Figure 4 shows a vertical cross-sectional view of a mattress covered by the composite material, where a perforation has occurred to the top layer.

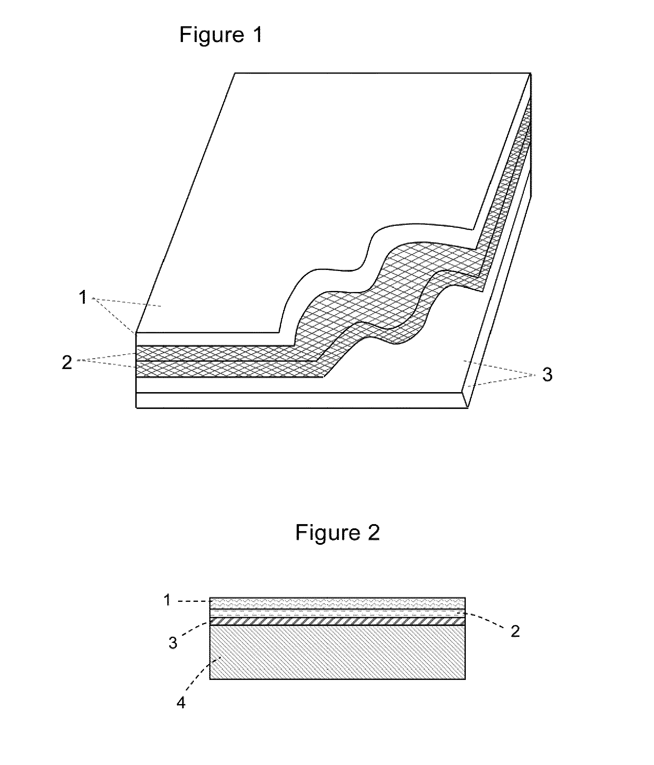

Referring first to Figure 1, a triple-layer composite fabric is shown in cross-sectional perspective view, where a portion has been broken away. The top layer 1 provides a multi-stretch waterproof barrier, whilst the second layer 2 is a vapour-permeable textile layer which is usually also capable of stretching in all directions. The third layer 3 is the puncture-proof backing layer that adds resilience and durability to the composite fabric. This fabric may be waterproof or comprise a waterproof coating.

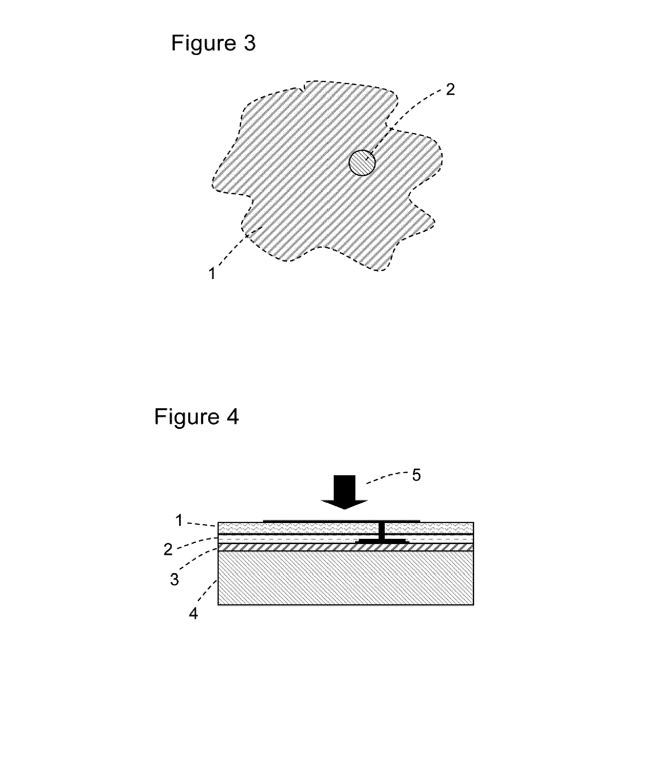

Figure 2 is a vertical cross-sectional view of the composite fabric when applied to a mattress 4, pillow or similar as a protective covering. If the top layer 1 is punctured, the second layer 2 will be exposed. This is not normally a waterproof layer. A puncture may extend through both of the top layers 1 and 2, in which case the puncture-resistant layer 3 will be exposed. This is illustrated in Figure 3, which presents a planar view of the top layer with a puncture.

Figure 4 uses a vertical cross-sectional view to illustrate the benefit of the presence of the puncture-proof barrier layer 3 in the event of a puncture to layers 1 and 2. Liquids that are able to penetrate the puncture will be trapped between layers 2 and 3 as layer 3 will not have been punctured. This prevents the contamination of the mattress 4 or underlying surface. If layer 3 is not formed from waterproof material, the underlying surface will eventually be affected, but the extra barrier layer provides extra time for the discovery of a puncture and helps to minimise the chances of contamination of the underlying surface.

In some instances, the mattress covers are not pierced by sharp objects (such as illustrated in Figures 3 and 4), but are damaged during storage or handling. The mattress protectors are weakened over time by abrasion to the upper layers. The reinforcement provided by the puncture-proof backing layer greatly reduces this type of damage. In addition, the backing layer can prevent the puncture of the top layers simply by providing support and reinforcement.

An example composite fabric according to the present invention is formed from polyurethane, knitted polyester, and a polyester coated textile. A sample of this material has been sent for analysis according to DIN EN 863 (1995-11; Protective clothing - test method: mechanical properties - puncture resistance), along with a sample of a typical mattress cover without a reinforcing backing layer.

Testing according to this DIN standard provides a measure of the puncture resistance by recording the maximum force required to push a spike with a specified speed through the test specimen. The test was conducted at 20°C, with a relative humidity of 65%. The apparatus used was an Instron, type CRE, class 0.5, with a 1kN cell. The perforation speed was 100mm/min. The spike used was a test spike formed from steel with a flat top.

The results of the tests are shown in Test 1 and Test 2. Test 1 provides analysis of a standard double-layered material, i.e. polyester coated with polyurethane, as is typically used for mattress covers; whilst Test 2 is an analysis of a composite fabric with a puncture-resistant backing layer.

### Test 1

| | |
|---|---|
| Date of ending the test | 15-12-2011 |
| Standard used | EN863 (1995) |
| Deviation from the standard | |
| Conditioning | 20°C, relative humidity 65% |
| Apparatus | Instron, type CRE, class 0,5 |
| Cell | 100N |
| Perforation speed | 100 mm/min |
| Used spike | Test spike of steel with flat top |
| Maximum displacement | 25mm |
| Number of test specimens | 4 |

| **Specimen** | **Force (N)** |
|---|---|
| #1 | 42.9 |
| #2 | 40.6 |
| #3 | 50.4 |
| #4 | 47.7 |
| **Average** | **45N** |

### Test 2

| | |
|---|---|
| Date of ending the test | 15-12-2011 |
| Standard used | EN863 (1995) |
| Deviation from the standard | |
| Conditioning | 20°C, relative humidity 65% |
| Apparatus | Instron, type CRE, class 0,5 |
| Cell | 1 kN |
| Perforation speed | 100 mm/min |
| Used spike | Test spike of steel with flat top |
| Maximum displacement | 25mm |
| Number of test specimens | 4 |

| **Specimen** | **Force (N)** |
|---|---|
| #1 | 121.9 |
| #2 | 133.2 |
| #3 | 125.5 |
| #4 | 119.0 |
| **Average** | **125N** |

The analysis demonstrated an improvement of 300% compared with standard double-layered cover material (Certified by Centexbel Belgium). Subsequent product testing showed no deterioration in other standards stipulated by NHS Supplies, namely: flexibility, vapour permeability, waterproofing and fire safety. Existing Waterlow and Norton pressure ulcer risk assessment figures remain unchanged.

The term "mattress cover" should be understood to be interchangeable with the term "mattress protector". The fabric used for mattress covers can equally be applied to protect cushions, duvets or other bedding.

The above examples have been described by way of example only, and the described examples are to be considered in all respects only as illustrative and not restrictive. It will be appreciated that variations of the described examples may be made without departing from the scope of the invention.

## Claims

1. A mattress cover formed from a composite fabric comprising at least a waterproof layer and a vapour permeable layer, with a central portion comprising a third layer of puncture-resistant material.

2. A mattress cover according to Claim 1, where there is more than one layer of puncture-resistant material.

3. A mattress cover according to any preceding claim, where the puncture-resistant material is a polyester coated textile.

4. A mattress cover according to any preceding claim, where the waterproof layer is formed from polyurethane.

5. A mattress cover according to any preceding claim, where the vapour permeable layer is formed from polyester.

6. A mattress cover according to any preceding claim, where a central portion comprises a layer of polyurethane, a layer of vapour permeable fabric and a layer of polyester coated textile.

7. A mattress cover according to any preceding claim, where the layer of puncture-resistant material is bonded to another layer of the composite fabric using high-frequency welding.

8. A mattress cover according to any preceding claim, where the water vapour transmission rate is at least approximately 100g/m²·24hr.

9. A mattress cover according to any preceding claim, where the maximum force required to push a spike with a speed of 100mm/min through a portion of the composite fabric at 20°C is greater than 100N.

10. A mattress cover according to any preceding claim, where the puncture resistance is at least double that of a mattress cover formed from knitted polyester coated with polyurethane.

11. A composite fabric comprising a waterproof layer and a vapour permeable layer, where a central portion of the composite fabric is reinforced with a third layer of puncture-resistant material.

12. A composite fabric according to Claim 11, where the puncture-resistant material is bonded to another layer of the composite fabric using high-frequency welding.

13. A composite fabric according to any of Claims 11 or 12, where the water vapour transmission rate is at least approximately 100g/m²·24hr.

14. A composite fabric according to any of Claims 11 to 13, where there is more than one layer of puncture-resistant material.

15. The use of a composite fabric according to any of Claims 11 to 14 as a mattress protector.
